# EUROPÄISCHE PATENTSCHRIFT

(11) **EP 2 067 231 B1**
(45) Veröffentlichungstag und Bekanntmachung des Hinweises auf die Patenterteilung: **03.05.2017**
(21) Anmeldenummer: 07801855.3
(22) Anmeldetag: 23.08.2007
(51) Int. Cl.: H02J 50/10, H01F 38/14, H01F 37/00, H01F 27/42

(54) **SYSTEM UND VERFAHREN ZUR BERÜHRUNGSLOSEN ENERGIEÜBERTRAGUNG**
SYSTEM AND METHOD FOR CONTACTLESS ENERGY TRANSMISSION
SYSTÈME ET PROCÉDÉ DE TRANSMISSION D'ÉNERGIE SANS CONTACT

(30) Priorität: 14.09.2006 DE 102006043960
(43) Veröffentlichungstag der Anmeldung: 10.06.2009
(73) Patentinhaber: SEW-EURODRIVE GmbH & Co. KG, 76646 Bruchsal (DE)
(72) Erfinder: PODBIELSKI, Leobald, 76199 Karlsruhe (DE); HABERMAAS, Martin, 68165 Mannheim (DE); BECKER, Günter, 76684 Östringen (DE); SCHMIDT, Josef, 76676 Graben-Neudorf (DE)
(74) Vertreter: Tüngler, Eberhard
(86) Internationale Anmeldenummer: PCT/EP2007/007427
(87) Internationale Veröffentlichungsnummer: WO 2008/031491

(56) Entgegenhaltungen:
- WO-A-02/45227
- WO-A-03/105328
- JP-A- 4 289 727
- US-A- 4 695 917

## Beschreibung

Die Erfindung betrifft ein System zur berührungslosen Energieübertragung.

Aus der DE 103 29 776 A1 und dem darin zitierten Stand der Technik ist ein System zur berührungslosen Energieübertragung bekannt.

Aus der WO 02/45227 A ist ein Verfahren zum Schutz mindestens eines Verbrauchers vor Überspannung bekannt, wobei ein Wechselrichter einen Gyrator als Wandler einer als Wechselrichter realisierten Wechselspannungsquelle in eine am Gyrator ausgangsseitige Stromquelle vorgesehen ist. Dabei weist der Gyrator zwei auf einem gemeinsamen Kern aufgewickelte Induktivitäten auf.

Aus der WO 03/105328 A ist eine stromkompensierte Drossel mit einem Dämpfungsglied bekannt.

Der Erfindung liegt daher die Aufgabe zugrunde, die Sicherheit bei Anlagen zu erhöhen.

Erfindungsgemäß wird die Aufgabe bei dem System nach den in Anspruch 1 angegebenen Merkmalen gelöst.

Wichtige Merkmale der Erfindung bei dem System sind, dass es zur berührungslosen Energieübertragung vorgesehen ist, wobei ein mittelfrequenter Strom in ein Primärleitersystem eingespeist ist, aus welchem Verbraucher mittels jeweils zugeordneter, an das Primärleitersystem induktiv gekoppelter Sekundärspulen versorgbar sind,
wobei eine stromkompensierte Drossel im Primärleitersystem vorgesehen ist. Von Vorteil ist dabei, dass eine Begrenzung auftretender Fehlerströme mittels der Drossel in kostengünstiger Weise und insbesondere in automatischer Weise ausführbar ist. Denn die Drossel ist ein passives Bauelement und hat die sicherheitserhöhende Eigenschaft durch ihr Vorhandensein. Falls die Drossel versagt, versagt auch das gesamte Energieübertragungssystem, weil die Drossel im Primärleitersystem vorgesehen ist. Insbesondere ist die Drossel vorteiligerweise in Serie mit dem Hinleiter und Rückleiter vorgesehen. Somit ist auch hier ein Schutz vorhanden.

Bei einer vorteilhaften Ausgestaltung ist das Primärleitersystem auf die Mittelfrequenz abgestimmt, wenn kein Fehlerstromanteil in der stromkompensierten Drossel wirksam ist. Von Vorteil ist dabei, dass das System auf Resonanz mit der Mittelfrequenz abgestimmt ist. Somit genügt eine schwache Kopplung zu den Sekundärspulen der Verbraucher, die ebenfalls auf Resonanz abgestimmt sind, und es ist ein geringer Energieverlust beim Übertragen der Energie erreichbar.

Bei einer vorteilhaften Ausgestaltung umfasst die stromkompensierte Drossel eine erste Wicklung, die vom Hinleiter des Primärleitersystems durchflossen wird, und eine zweite Wicklung, die vom Rückleiter des Primärleitersystems durchflossen wird. Von Vorteil ist dabei, dass die beiden Ströme genau gleich große sind, solange kein Fehlerstrom auftritt. Somit ist das Magnetfeld im Spulenkern der Drossel verschwindend, insbesondere bei Verwendung eines Ringkerns, auf den die zum Hinleiter und Rückleiter gehörenden Wicklungen, aufgebracht sind. Im diesem Fall beeinflusst die Drossel die Abstimmung des Primärleiterkreises auf Resonanz mit der Mittelfrequenz nicht oder nur unwesentlich. Tritt jedoch ein Fehlerstrom auf, wird die Drossel aufmagnetisiert und für den auftretenden Fehlerstromanteil wird die Induktivität der Drossel wirksam. Außerdem ist mit einer Hilfswicklung dann eine überwachbare Induktionsspannung verwendbar.

Bei einer vorteilhaften Ausgestaltung ist die Induktivität der Drosselwicklungen höher als die Streckeninduktivität des Primärleitersystems, insbesondere mehr als zehnmal oder mehr als 20mal höher, insbesondere mehr als 100 mal höher. Von Vorteil ist dabei, dass der Fehlerstrom auf einen sicheren Wert begrenzt wird. Personen sind also automatisch geschützt.

Bei einer vorteilhaften Ausgestaltung ist das Primärleitersystem als langgestreckte Stromschleife ausgeführt, insbesondere wobei ein erster Teil der Schleife als Hinleiter und der restliche Teil als Rückleiter ausgeführt ist, insbesondere wobei Hinleiter und Rückleiter im Wesentlichen parallel verlegt sind. Von Vorteil ist dabei, dass Schienensysteme, wie Einschienenhängebahnen, Regalbediengeräte oder dergleichen, oder fahrerlose Transportsysteme mit bodenverlegtem Primärleitersystem versorgbar sind.

Bei einer vorteilhaften Ausgestaltung beträgt die Mittelfrequenz mehr als 10kHz. Von Vorteil ist dabei, dass große Leistungen im Kilowatt Bereich übertragbar sind und die Drossel derart dimensionierbar ist, dass der Personenschutz im Fehlerstromfall einerseits gewährleistet ist, aber andererseits die Verbraucher im Wesentlichen ungestört weiter betreibbar sind.

Bei einer vorteilhaften Ausgestaltung beträgt die bei Fehlerstrom wirksam werdende Induktivität der Drossel mehr als 10 Milli-Henry oder sogar mehr als 25 Milli-Henry. Von Vorteil ist dabei, dass bei der verwendeten Mittelfrequenz eine genügend hohe Impedanz vorhanden ist.

Bei einer vorteilhaften Ausgestaltung sind die Drossel direkt mit den Streckeninduktivitäten verbunden, insbesondere mittels derartig dimensionierten Kapazitäten, dass die zugehörige Resonanzfrequenz im Wesentlichen der Mittelfrequenz entspricht. Von Vorteil ist dabei, dass das Primärleitersystem auf Resonanz abgestimmt ist und somit ein besonders hoher Wirkungsgrad erreichbar ist.

Bei einer vorteilhaften Ausgestaltung ist die Drossel aus einem Transformator versorgt, der aus einem wechselspannungsgespeisten Gyrator versorgt ist. Von Vorteil ist dabei, dass das spannungsquellenverhalten in ein stromquellenverhalten transformierbar ist. Dabei ist der Gyrator auf die Mittelfrequenz abgestimmt.
Bei einer vorteilhaften Ausgestaltung ist der Gyrator aus einer mittelfrequenten Spannungsquelle versorgt, insbesondere aus einem netzversorgten Frequenzumrichter. Von Vorteil ist dabei, dass industrieübliche Komponenten verwendbar sind.

Bei einer vorteilhaften Ausgestaltung ist eine Hilfswicklung an der Drossel vorgesehen, insbesondere zur Detektion von durch im Primärleitersystem auftretendem Fehlerstrom an der Hilfswicklung induzierter Spannung. Von Vorteil ist dabei, dass ein dem Fehlerstrom entsprechendes Signal bestimmbar ist, das sogar galvanisch getrennt ist.

Bei einer vorteilhaften Ausgestaltung wird die an der Hilfswicklung auftretende Spannung oder deren gleichgerichteter Wert überwacht auf Überschreiten eines kritischen Wertes. Von Vorteil ist dabei, dass einfache und kostengünstige Komponenten, wie Komparator oder dergleichen, verwendbar sind.

Bei einer vorteilhaften Ausgestaltung ist bei Überschreiten ein Abschalten des Systems bewirkbar, insbesondere mittels Zuführung der an der Hilfswicklung auftretende Spannung an die Steuerelektronik des Frequenzumrichters. Von Vorteil ist dabei, dass eine Erhöhung der Sicherheit in einfacher Weise erfolgt.

Bei einer vorteilhaften Ausgestaltung ist die Drossel als Ringkern ausgeführt, auf der die zwei Wicklungen und die Hilfswicklung vorgesehen sind. Von Vorteil ist dabei, dass die Stromkompensation der Drossel, also das Verschwinden des wesentlichen Magnetfeldes im Kern, fast ideal realisierbar ist.

Bei einer vorteilhaften Ausgestaltung ist die Drossel mit der Hilfswicklung als Summenstromwandler vorgesehen. Von Vorteil ist dabei, dass die Summe des Hinleiterstroms und des Rückleiterstroms in einfacher Weise abbildbar ist als resultierendes Magnetfeld, das zur Induktion von Spannung in der Hilfswicklung vorsehbar ist. Bei betragsmäßiger Gleichheit des Hinleiterstroms und des Rückleiterstroms verschwindet das Magnetfeld.

Wichtige Merkmale bei einem Verfahren sind, dass es zur Begrenzung und/oder Erkennung eines Fehlerstroms bei einem System zur berührungslosen Energieübertragung vorgesehen ist, wobei mittels im Primärleitersystem vorgesehenen Begrenzungsmitteln, insbesondere mittels einer stromkompensierten Drossel, auftretende Fehlerströme begrenzt werden, insbesondere auf ungefährliche Werte,
und die Verbraucher ungestört weiter versorgt werden. Von Vorteil ist dabei, dass einerseits die Sicherheit der Personen erhöht ist und andererseits die Ausfallzeit der Anlage verringert ist. Denn die Verbraucher können ungestört weiter versorgt werden, weil nur ein kleiner ungefährlicher Stromanteil von wenigen Milliampere über die Person verloren geht.

Nur wenn beispielsweise ein doppelter Fehler auftritt, wie beispielsweise ein erster Isolationsfehler am Hinleiter und ein zweiter Isolationsfehler am Rückleiter, dann könnte eine Person Fehlerstrom innerhalb des Primärleitersystems Stromanteile umleiten, die gefährlich hohe Werte annehmen könnte.

Wesentlich ist aber bei der Erfindung, dass die Hinleiter und Rückleiter ohne Isolierung verlegbar sind und die Anlage trotzdem sicher betreibbar ist, also ohne Gefahr für Mensch oder Tier beim Berühren der Anlage.

Die Sicherheit entspricht also derjenigen Sicherheit, die bei Isolierung des Primärleitersystems vorhanden wäre.

Bei einer vorteilhaften Ausgestaltung wird der Fehlerstrom erkannt, insbesondere bei Überschreiten eines kritischen Wertes. Von Vorteil ist dabei, dass eine einfache Überwachung des kritischen Wertes ausführbar ist.

Bei einer vorteilhaften Ausgestaltung wird auf Überschreiten eines kritischen Spannungswertes überwacht und bei Überschreiten wird ein Abschalten einer mittelfrequenten Spannungsquelle ausgelöst. Von Vorteil ist dabei, dass zusätzlich die Sicherheit noch weiter erhöhbar ist, indem die Anlage abgeschaltet wird und der Isolationsfehler behoben wird.

Weitere Vorteile ergeben sich aus den Unteransprüchen.

Die Erfindung wird nun anhand von Abbildungen näher erläutert:

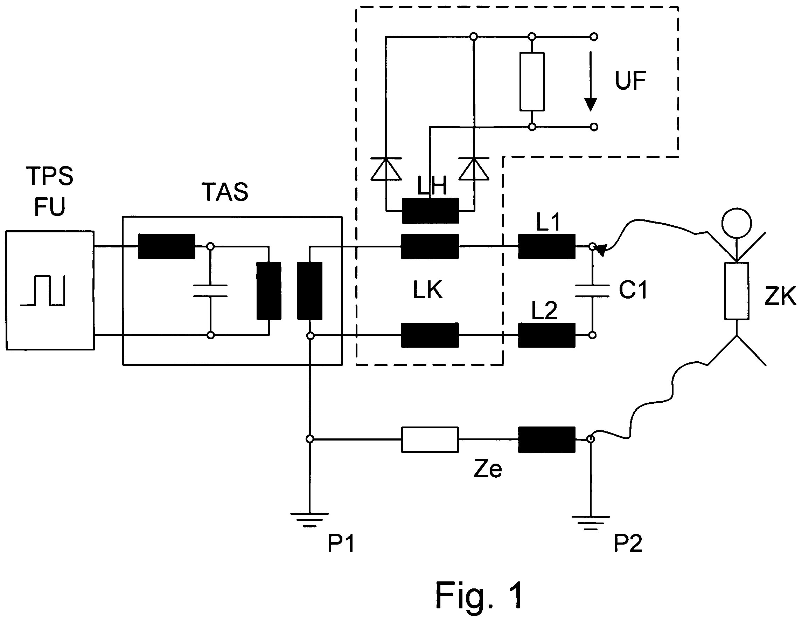

In der Figur 1 ist die Primärseite des Systems mit den erfindungsgemäßen Vorrichtungen gezeigt.

Der Wechselrichter stellt eine mittelfrequente Wechselspannung zur Verfügung, die in die Schaltungsgruppe TAS eingespeist wird. Diese Schaltungsgruppe umfasst einen Gyrator mit Anpasstransformator. Dabei ist der Gyrator mit seiner Kapazität und Induktivität derart bemessen, dass die zugehörige Resonanzfrequenz der eingespeisten Mittelfrequenz entspricht.

Somit wird das Spannungsquellen-Verhalten des Wechselrichters in ein stromquellenartiges Verhalten umgewandelt, wodurch ein im Wesentlichen vorgebbarer Strom in den Anpasstransformator einspeisbar ist, dessen Sekundärseite die Primärleitungen des berührungslosen Energieübertragungssystems speist.

Die Induktivität der meist langgestreckt ausgeführten Primärleiter sind in Figur 1 symbolisiert. Dabei ist mit L_1 die Induktivität des Hinleiters bezeichnet und mit L_2 die des Rückleiters. Entlang der Strecke sind Kapazitäten mit dem Wert C_1 entsprechendem Wert so vorgesehen, dass auch im Primärleiterbereich die zugehörige Resonanzfrequenz der Mittelfrequenz entspricht.

Entlang dem Primärleiter ist ein meist bewegbar angeordneter Sekundärteil angeordnet, der eine induktiv mit dem Primärleiter gekoppelte Sekundärspule umfasst, wobei ebenfalls ein mit der Sekundärspule auf die Mittelfrequenz als Resonanzfrequenz abgestimmter Kondensator verbunden ist, aus dem dann der Verbraucher versorgbar ist. Dem Verbraucher ist jedoch eine Schaltungsgruppe mit zum Gyrator inversem Verhalten vorschaltbar, wodurch die Spannungskonstanz verbesserbar ist. Die genannte Schaltungsgruppe ist als entsprechender Vierpol ausführbar.

Als Mittelfrequenz sind Werte zwischen 10 kHz und 100 kHz vorteilhaft verwendbar, insbesondere bei Übertragung von Leistungen von mehreren Hundert Watt bis einigen Kilowatt.

Im Primärleitersystem ist auch eine stromkompensierte Drossel L_K vorgesehen, die eine Hilfswicklung L_H umfasst. Der Hinleiter ist also durch eine erste Wicklung geführt, der Rückleiter durch eine zweite. Die Drossel ist dabei derart ausgeführt, dass die beiden von den Wicklungen erzeugten Magnetfelder sich gegenseitig zumindest im Wesentlichen aufheben. Die Hilfswicklung ist auf einem den beiden Wicklungen gemeinsamen Spulenkern vorsehbar, insbesondere in demjenigen beschriebenen Bereich, in welchem die beiden erzeugten Magnetfelder sich gegenseitig zumindest im Wesentlichen aufheben.

Findet nun bei einem Isolationsfehler ein Berühren durch eine Person oder einen Gegenstand statt, wird ein Stromanteil aus dem Primärleitersystem über die Körperimpedanz Z_K an das Fußpotential P2 der Person oder des Gegenstandes und von dort über die Erdimpedanz Z_e bis zum Erdungspotential P1 der Vorrichtung abfließen.

Entsprechend tritt ein Unterschied in den Stromwerten der beiden Wicklungen der Drossel auf und das nicht mehr kompensierte Magnetfeld induziert in der Hilfswicklung eine Spannung. Diese Wechselspannung wird zur Detektion des Fehlers verwendet. Dabei wird das Überschreiten eines kritischen Spannungswertes detektiert. Bei Detektion der unzulässigen Spannung wird der einspeisende Wechselrichter FU abgeschaltet.

In Figur 1 ist gezeigt, dass die zu detektierende Wechselspannung zu einer Gleichspannung U_F als Ausgangsspannung gleichgerichtet wird. Somit muss nur ein Gleichspannungswert detektiert werden, da auch zusätzlich eine Glättung vorsehbar ist.

Als Wechselrichter FU ist vorteilhafterweise ein netzspannungsversorgbarer Frequenzumrichter verwendbar.

Wesentlich bei der Erfindung ist, dass die Drossel eine sehr hohe Induktivität aufweist von mehr als 10 mH, insbesondere mehr als 20 mH. Besonderen Schutz bewirken Drosseln von mehr als 26 mH.

Bei der Erfindung muss beachtet werden, dass der primärseitig fließende Strom in zwei Stromkreisen vorstellbar ist.

Ein erster ist der gleichgetaktete Stromanteil, welcher im Hinleiter fließt und über den Rückleiter zurückfließt. Für diesen Stromanteil ist die Drossel stromkompensiert zu denken. Somit wirkt hier die hohe Induktivität der Drossel nicht. Es wirken als Induktivitäten nur die Streckeninduktivitäten. Somit fließt auch im Fehlerfall ein hoher Primärstrom von beispielsweise 10 oder 60 Ampere weiter. Die induktiv gekoppelten Verbraucher sind ungestört versorgbar.

Ein zweiter Stromanteil, der Fehlerstromanteil, ist derjenige, welcher über die Person oder den Gegenstand gegen Erde abfließt und über die erste Wicklung der Drossel im Hinleiter auf die Person zufließt. Für diesen wird die Induktivität der Drossel wirksam. Bei den genannten Werten ist dieser Induktivität bei der angewandten Mittelfrequenz ein sehr hoher Impedanzwert zugeordnet, der viel höher ist als der Impedanzwert einer Person. Somit fließt nur ein kleiner Strom durch die Person und sie ist mittels der für diesen Stromanteil wirksam werdenden Induktivität der ersten Wicklung der Drossel geschützt.

Somit ist zwar ein Abschalten der Quelle im Fehlerfall mittels Detektion der Ausgangsspannung U_F und deren Vergleich mit einem kritischen Wert ermöglicht, jedoch ist schon durch die Drossel eine Begrenzung des Fehlerstromanteils und somit ein Schutz der Person erreicht.

Die Streckeninduktivitäten L_1 + L_2 liegen im Bereich 10µH bis 500 µH bei Anlagen, deren Primärleitersystem zwischen einigen 10 und größenordnungsmäßig 1000 Meter Länge aufweist und sind somit wesentlich kleiner als die hohe Induktivität der Drossel.

### Bezugszeichenliste

- L_H: Hilfswicklung
- L_K: stromkompensierte Drossel
- FU: Wechselrichter
- TAS: Gyrator mit Anpasstransformator
- C1: Kapazität
- L1: Streckeninduktivität
- L2: Streckeninduktivität
- Z_e: Erdimpedanz
- Z_K: Körperimpedanz
- P1: Erdungspotential
- P2: Fußpotential der Person
- U_F: Ausgangsspannung

## Patentansprüche

1. System zur berührungslosen Energieübertragung,
wobei ein mittelfrequenter Strom aus einem netzversorgten Frequenzumrichter mit Steuerelektronik als mittelfrequenter Spannungsquelle mit einer Mittelfrequenz mit Werten zwischen 10kHz und 100 kHz in ein Primärleitersystem eingespeist ist, aus welchem Verbraucher mittels jeweils zugeordneter, an das Primärleitersystem induktiv gekoppelter Sekundärspulen versorgbar sind,
wobei das Primärleitersystem einen Hinleiter und einen Rückleiter aufweist,
wobei eine stromkompensierte Drossel (L_K) im Primärleitersystem vorgesehen ist, welche auftretende Fehlerströme begrenzt,
**dadurch gekennzeichnet, dass**
die stromkompensierte Drossel (L_K) eine erste Wicklung umfasst, die vom durch den Hinleiter des Primärleitersystems fließenden Strom durchflossen wird, und eine zweite Wicklung umfasst, die vom durch den Rückleiter des Primärleitersystems fließenden Strom durchflossen wird,
wobei die stromkompensierte Drossel (L_K) aus einem Transformator versorgt ist, der aus einem wechselspannungsgespeisten Gyrator (TAS) versorgt ist,
wobei eine Hilfswicklung (L_H) auf einem den beiden Wicklungen gemeinsamen Spulenkern angeordnet ist,
wobei das System ein Mittel zur Detektion von durch im Primärleitersystem auftretendem Fehlerstrom an der Hilfswicklung (L_H) induzierter Spannung aufweist,
wobei die Drossel (L_K) eine Induktivität aufweist von mehr als 10 mH, insbesondere von mehr als 20 mH.

2. System nach Anspruch 1,
**dadurch gekennzeichnet, dass**
das Primärleitersystem auf die Mittelfrequenz abgestimmt ist, wenn kein Fehlerstromanteil in der stromkompensierten Drossel (L_K) wirksam ist.

3. System nach mindestens einem der vorangegangenen Ansprüche,
**dadurch gekennzeichnet, dass**
die Induktivität der Drosselwicklungen höher ist als eine Streckeninduktivität (L1) des Primärleitersystems, insbesondere mehr als zehnmal oder mehr als 20 mal höher, insbesondere mehr als 100 mal höher.

4. System nach mindestens einem der vorangegangenen Ansprüche,
**dadurch gekennzeichnet, dass**
das Primärleitersystem als langgestreckte Stromschleife ausgeführt ist, insbesondere wobei ein erster Teil der Schleife als Hinleiter und der restliche Teil als Rückleiter ausgeführt ist, insbesondere wobei Hinleiter und Rückleiter im Wesentlichen parallel verlegt sind.

5. System nach mindestens einem der vorangegangenen Ansprüche,
**dadurch gekennzeichnet, dass**
die bei Fehlerstrom wirksam werdende Induktivität der Drossel (L_K) mehr als 25 mH beträgt.

6. System nach Anspruch 3,
**dadurch gekennzeichnet, dass**
die Drossel (L_K) direkt mit den Streckeninduktivitäten (L1, L2) verbunden ist insbesondere mittels derartig dimensionierten Kapazitäten (C1), dass die zugehörige Resonanzfrequenz im Wesentlichen der Mittelfrequenz entspricht.

7. System nach mindestens einem der vorangegangenen Ansprüche,
**dadurch gekennzeichnet, dass**
die an der Hilfswicklung (L_H) auftretende Spannung oder deren gleichgerichteter Wert überwacht wird auf Überschreiten eines kritischen Wertes.

8. System nach nach Anspruch 7,
**dadurch gekennzeichnet, dass**
bei Überschreiten des kritischen Wertes ein Abschalten des Systems bewirkbar ist, insbesondere mittels Zuführung der an der Hilfswicklung (L_H) auftretende Spannung an die Steuerelektronik des Frequenzumrichters.

9. System nach mindestens einem der vorangegangenen Ansprüche,
**dadurch gekennzeichnet, dass**
die Drossel (L_K) als Ringkern ausgeführt ist, auf der die zwei Wicklungen und die Hilfswicklung (L_H) vorgesehen sind,
und /oder wobei
die Drossel (L_K) mit der Hilfswicklung (L_H) als Summenstromwandler vorgesehen ist.

## Claims

1. A system for contact-free energy transmission,
wherein a medium-frequency current is fed from a mains-supplied frequency converter with control electronics as a medium-frequency voltage source with a medium frequency having values of between 10 kHz and 100 kHz into a primary conductor system, from which consumers can be supplied by means of secondary coils associated in each case which are inductively coupled to the primary conductor system,
wherein the primary conductor system has a forward conductor and a return conductor,
wherein a current-compensated choke (L_K) is provided in the primary conductor system, which choke limits any fault currents occurring,
**characterised in that**
the current-compensated choke (L_K) comprises a first winding through which the current flowing through the forward conductor of the primary conductor system flows, and comprises a second winding through which the current flowing through the return conductor of the primary conductor system flows,
the current-compensated choke (L_K) being supplied from a transformer which is supplied from a gyrator (TAS) supplied with alternating current,
an auxiliary winding (L_H) being arranged on a coil core common to the two windings,
the system having a means for detecting voltage induced at the auxiliary winding (L_H) by fault current occurring in the primary conductor system,
the choke (L_K) having an inductance of more than 10 mH, in particular of more than 20 mH.

2. A system according to Claim 1,
**characterised in that**
the primary conductor system is matched to the medium frequency if no fault current component is active in the current-compensated choke (L_K).

3. A system according to at least one of the preceding claims,
**characterised in that**
the inductance of the choke windings is greater than a path inductor (L1) of the primary conductor system, in particular more than ten times or more than 20 times greater,
in particular more than 100 times greater.

4. A system according to at least one of the preceding claims,
**characterised in that**
the primary conductor system is embodied as an elongate current loop, in particular with a first part of the loop being embodied as a forward conductor and the remaining part as a return conductor, in particular the forward conductor and return conductor being laid substantially parallel.

5. A system according to at least one of the preceding claims,
**characterised in that**
the inductance of the choke (L_K) which becomes active in the event of a fault current is more than 25 mH.

6. A system according to Claim 3,
**characterised in that**
the choke (L_K) is connected directly to the path inductors (L1, L2) in particular by means of capacitors (C1) of such dimensions that the associated resonant frequency corresponds substantially to the medium frequency.

7. A system according to at least one of the preceding claims,
**characterised in that**
the voltage occurring at the auxiliary winding (L_H) or the rectified value thereof is monitored for a critical value being exceeded.

8. A system according to Claim 7,
**characterised in that**
upon the critical value being exceeded the system can be switched off, in particular by means of supplying the voltage occurring at the auxiliary winding (L_H) to the control electronics of the frequency converter.

9. A system according to at least one of the preceding claims,
**characterised in that**
the choke (L_K) is embodied as a toroidal core on which the two windings and the auxiliary winding (L_H) are provided,
and/or
the choke (L_K) with the auxiliary winding (L_H) being provided as a summation current transformer.

## Revendications

1. Système de transmission d'énergie sans contact,
dans lequel un courant à moyenne fréquence provenant d'un variateur de fréquence doté d'une électronique de commande et alimenté par le réseau, utilisé comme source de tension à moyenne fréquence avec des valeurs de moyenne fréquence comprises entre 10 kHz et 100 kHz, est injecté dans un système de conducteurs primaires à partir duquel des consommateurs peuvent être alimentés par l'intermédiaire de bobines secondaires associées respectives, couplées par induction au système de conducteurs primaires,
dans lequel le système de conducteurs primaires présente un conducteur aller et un conducteur retour,
dans lequel une bobine d'arrêt compensée en courant (L_K) est prévue dans le système de conducteurs primaires, laquelle limite les courants de défauts qui apparaissent,
**caractérisé en ce que**
la bobine d'arrêt compensée en courant (L_K) comprend un premier enroulement, qui est traversé par le courant circulant à travers le conducteur aller du système de conducteurs primaires, et comprend un deuxième enroulement, qui est traversé par le courant circulant à travers le conducteur retour du système de conducteurs primaires,
la bobine d'arrêt compensée en courant (L_K) étant alimentée à partir d'un transformateur qui est alimenté à partir d'un gyrateur alimenté en tension alternative (TAS),
un enroulement auxiliaire (L_H) étant disposé sur un noyau de bobine commun aux deux enroulements,
le système présentant un moyen pour détecter une tension induite sur l'enroulement auxiliaire (L_H) par un courant de défaut apparaissant dans le système de conducteurs primaires,
la bobine d'arrêt (L_K) présentant une inductance de plus de 10 mH, en particulier de plus de 20 mH.

2. Système selon la revendication 1,
**caractérisé en ce que**
le système de conducteurs primaires est accordé sur la moyenne fréquence lorsqu'aucune composante de courant de défaut n'est active dans la bobine d'arrêt compensée en courant (L_K).

3. Système selon au moins l'une des revendications précédentes,
**caractérisé en ce que**
l'inductance des enroulements de la bobine d'arrêt est plus élevée qu'une inductance de ligne (L1) du système de conducteurs primaires, en particulier plus de dix fois ou plus de 20 fois plus élevée, en particulier plus de 100 fois plus élevée.

4. Système selon au moins l'une des revendications précédentes,
**caractérisé en ce que**
le système de conducteurs primaires est réalisé sous la forme d'une boucle de courant étendue, en particulier une première partie de la boucle étant réalisée comme conducteur aller et la partie restante comme conducteur retour, en particulier le conducteur aller et le conducteur retour étant posés sensiblement parallèlement.

5. Système selon au moins l'une des revendications précédentes,
**caractérisé en ce que**
l'inductance de la bobine d'arrêt (L_K) devenant active en cas de courant de défaut est supérieure à 25 mH.

6. Système selon la revendication 3,
**caractérisé en ce que**
le bobine d'arrêt (L_K) est reliée directement aux inductances de ligne (L1, L2), en particulier par l'intermédiaire de capacités (C1) dimensionnées de façon que la fréquence de résonance associée corresponde sensiblement à la moyenne fréquence.

7. Système selon au moins l'une des revendications précédentes,
**caractérisé en ce que**
la tension apparaissant à l'enroulement auxiliaire (L_H) ou sa valeur redressée est surveillée en ce qui concerne le dépassement d'une valeur critique.

8. Système selon la revendication 7,
**caractérisé en ce que**
un arrêt du système peut être provoqué en cas de dépassement de la valeur critique, en particulier par amenée de la tension apparaissant à l'enroulement auxiliaire (L_H) à l'électronique de commande du variateur de fréquence.

9. Système selon au moins l'une des revendications précédentes,
**caractérisé en ce que**
la bobine d'arrêt (L_K) est réalisée sous la forme d'un noyau annulaire sur lequel les deux enroulements et l'enroulement auxiliaire (L_H) sont prévus,
et/ou dans lequel
la bobine d'arrêt (L_K) avec l'enroulement auxiliaire (L_H) est prévue comme transformateur de courant sommateur.
